## Europäisches Patentamt
## European Patent Office
## Office européen des brevets

(19)

(11) Veröffentlichungsnummer: **0 212 513**
**B1**

(12) **EUROPÄISCHE PATENTSCHRIFT**

(45) Veröffentlichungstag der Patentschrift:
06.09.89

(21) Anmeldenummer: **86111025.2**

(22) Anmeldetag: **09.08.86**

(51) Int. Cl.⁴: **B 01 D 53/36,** B 01 J 21/16,
B 01 J 29/02

(54) Katalysator zur Verringerung des Stickoxidgehalts von Verbrennungsabgasen.

(30) Priorität: **13.08.85 DE 3529060**
**10.09.85 DE 3532226**

(43) Veröffentlichungstag der Anmeldung:
**04.03.87 Patentblatt 87/10**

(45) Bekanntmachung des Hinweises auf die Patenterteilung:
**06.09.89 Patentblatt 89/36**

(84) Benannte Vertragsstaaten:
**AT BE CH DE FR GB LI LU NL SE**

(56) Entgegenhaltungen:
**DE-A- 2 617 744**

(73) Patentinhaber: **SÜD-CHEMIE AG, Lenbachplatz 6,**
**D-8000 München 2 (DE)**

(72) Erfinder: **Schneider, Michael, Dr., Waldparkstrasse 54a,**
**D-8012 Ottobrunn-Riemerling (DE)**
Erfinder: **Kochloefl, Karl, Dr.,**
**Justus-von-Liebig-Strasse 3,**
**D-8206 Bruckmühl/Heufeld (DE)**
Erfinder: **Maletz, Gerd, Dr., Innere Regensburger**
**Strasse 9a, D-8300 Landshut (DE)**
Erfinder: **Wernicke, Hans Jürgen, Dr.,**
**Böhmerwaldstrasse 37g, D-8192 Geretsried (DE)**

(74) Vertreter: **Reitzner, Bruno, Dr., Patentanwälte Dipl.-Ing.**
**R. Splanemann Dr. B. Reitzner Tal 13,**
**D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Katalysator zur Verringerung des Stickoxidgehalts von Abgasen, insbesondere von Verbrennungsabgasen.

Bei der Verbrennung fossiler Brennstoffe werden sowohl aus stickstoffhaltigen Komponenten als auch aus dem Luftstickstoff Stickoxide ($NO_x$) gebildet, welche in die Atmosphäre gelangen und eine ernste Umweltbeeinträchtigung darstellen.

Es ist bekannt, daß Stickoxide durch $NH_3$ in $N_2$ und $H_2O$ überführt werden können und daß diese Reaktion in einem weiten Temperaturbereich ziemlich selektiv ist, d.h. in Gegenwart eines hohen Sauerstoffüberschusses (wie er in Verbrennungsabgasen gewöhnlich vorhanden ist) ohne allzu hohe Ammoniakverluste infolge Oxidation abläuft, so daß nur relativ geringe Mengen an Reduktionsmittel erforderlich sind. Es sind weiterhin bereits verschiedene Katalysatoren für die $NO_x$–Reduktion mittels Ammoniak bekannt.

So ist z.B. aus der DE-AS 24 10 175 ein derartiger Katalysator aus Oxiden des Vanadiums, Molybdäns und/oder Wolframs der Stöchiometrie $V_{12-x-y}MO_xW_y$ bekannt, wobei x und y durch die Beziehungen $0 \leq x \leq 8$, $0 \leq y \leq 5$ und $0,3 \leq (x+y) \leq 8$ festgelegt sind.

Es ist weiterhin aus der DE-PS 24 58 888 ein Verfahren zur reduktiven Zerstörung von Stickoxiden in Abgasen bekannt, bei dem ein Stickoxide, molekularen Sauerstoff und Ammoniak enthaltendes Gasgemisch mit einer Katalysatorzusammensetzung in Berührung gebracht wird, die als wesentliche Bestandteile (A) Titan in Form von Oxiden in einem innigen Gemisch mit (B) Eisen oder Vanadium in Form von Oxiden enthält.

Diese Katalysatoren haben den Nachteil, daß die als katalytisch aktive Komponenten enthaltenen relativ teuren Übergangsmetallverbindungen nur zu einem geringen Grad ausgenutzt werden, da ihre Verteilung nicht optimal ist. Es ist zwar vorgesehen, die Aktivkomponente durch inerte, feste Träger zu strecken, wodurch die Wirtschaftlichkeit zweifellos verbessert wird, doch besteht bei einer Verdünnung mit inertem Material die Gefahr, daß die katalytische Aktivität stark vermindert wird. Diese Katalysatoren haben den Nachteil, daß sie auch das im Rauchgas häufig enthaltene $SO_2$ zu $SO_3$ oxidieren, was zum Beispiel zu Salzablagerungen in nachgeschalteten Anlageteilen führen kann.

Ferner ist aus der DE-OS 34 38 367 ein Katalysator zur Verringerung des Stickoxidgehalts von Verbrennungsabgasen durch selektive Reduktion bekannt, der aus (A) 80 bis 95 Gew.-% eines schwefeloxidhaltigen katalytischen Oxids, das u.a. durch thermische Behandlung einer wäßrigen Oxidverbindung des Titans oder des Siliciums erhältlich ist, (B) 0 bis 5 GEw.-% eines Vanadiumoxid enthaltenden katalytischen Oxids und (C) 1 bis 15 Gew.-% eines katalytischen Oxids, z.B. des Wolframs, besteht.

Als wesentlich für diesen Katalysator wird die Bildung einer aus $SiO_2$ und $TiO_2$ zusammengesetzten Feststoffsäure angesehen, deren Acidität durch die Behandlung mit Schwefelsäure oder Ammoniumsulfat modifiziert wird. Man betrachtet die Feststoffsäureverteilung als maßgeblich für die Steuerung der $NH_3$- Adsorption an der Katalysatoroberfläche und damit für die Verbesserung der katalytischen Aktivität.

$SiO_2$ wird dabei in Form von Kieselsol eingesetzt. Bekanntlich erhält man aus $SiO_2$-Solen Kieselgele, welche sich durch hohe BET-Oberflächen bei gleichzeitig hoher Porosität auszeichnen, wobei aber der Makroporenanteil gering ist, was negative Auswirkungen auf den Stofftransport und damit auf die katalytische Wirksamkeit hat.

Ferner ist aus der DE-OS 27 48 471 eine Katalysatormasse zur Anwendung bei der Dampfphasenreduktion von Stickoxiden mit Ammoniak, insbesondere zur Verringerung des Stickoxidgehalts von Verbrennungsabgasen, bekannt, die im wesentlichen aus einem Oxid oder Sulfat eines der Metalle Kupfer, Vanadium, Chrom, Molybdän, Wolfram, Mangan, Eisen oder Cer auf einem geformten Träger, der Titanoxid und ein Tonmineral mit einer durchschnittlichen Teilchengröße von 0,1 bis 100 μm enthält, besteht. Es können u.a. Tonmineralien vom Typ der Dreischichtsilikate verwendet werden. Dieses Tonmineral wird als Bindemittel in Mengen von bis zu 15 Gew.-% verwendet, wobei lediglich eine Erhöhung der Festigkeit der Katalysatoren bezweckt wird. Bezüglich der katalytischen Wirksamkeit spielt es in den angegebenen Mengen keine Rolle. In größeren Mengen wirkt es sich in dieser Hinsicht sogar negativ aus; außerdem vermindert es die Beständigkeit des Katalysators gegenüber $SO_x$-haltigen Abgasen.

Eine ähnliche Katalysatormasse zur Anwendung bei der Dampfphasenreduktion von Stickoxiden mit Ammoniak ist aus der DE-OS 26 17 744 bekannt, wobei als Trägermaterial z.B. Siliciumdioxid, Aluminiumoxid, Siliciumdioxid-Aluminiumoxid, Diatomeenerde, saurer Ton, aktivierter Ton, keramische Materialen oder Zeolith verwendet werden können.

Schließlich sind aus der US-PS 39 62 135 geformte Katalysatorträger bekannt, bei deren Herstellung Montmorillonit einer mehrstufigen Säureaktivierung unterzogen wird. In der ersten Stufe wird die Säureaktivierung nur so weit durchgeführt, daß die Plastizität des säureaktivierten Materials erhalten bleibt, so daß noch Formkörper hergestellt werden können. Der nach dieser Stufe erhaltene Ton hat einen $SiO_2$-Gehalt von mehr als etwa 70%; seine Kristallstruktur ist im wesentlichen noch erhalten.

Die aus dem plastischen Material nach der ersten Säurebehandlung erzeugten Formkörper werden anschließend calciniert und dann nochmals einer Säureaktivierung unterzogen, wobei der $SiO_2$-Gehalt auf mehr als 80 bis 85% erhöht wird. Anschließend erfolgt eine weitere Calcinierung. Die Säureaktivierung und Calcinierung kann noch ein oder mehrmals durchgeführt werden. Bereits nach der zweiten Säurebehandlungs- und Calcinierstufe liegt ein Material vor, dessen Gitterstruktur weitgehend zerstört ist. Der Zweck dieser mehrfachen Säurebehandlung und Calcinierung besteht darin, den Porenradius auf mehr als 30 A zu erhöhen. Dies ist wichtig bei den in Betracht gezogenen Reaktionen, z.B. beim Erdölcracken, beim Reformieren, Hydroformieren und bei der hydrierenden Entschwefelung, wobei die Gefahr einer Koksabscheidung sowie einer Verstopfung der Poren durch Metallverbindungen auftritt. Dieses Problem, das durch die mehrmalige Säureaktivierung und zwischengeschaltete Calcinierung des Tonminerals gelöst wird, stellt sich bei den erfindungsgemäßen verwendeten Katalysatoren nicht, da nur kleine Moleküle ($NO_x$ und $NH_3$) umgesetzt werden.

Das mehrmals säurebehandelte und calcinierte Trägermaterial kann z.B. mit Ammoniummolybdat und Kobaltnitrat belegt werden, wobei der erhaltene Katalysator zur Dampfphasenentschwefelung eines thiophenhaltigen Heptans verwendet wird.

Es wurde nun gefunden, daß durch Verwendung von Talk, der vorzugsweise in bestimmter Weise modifiziert ist und mit weiteren oxidischen Katalysatorkomponenten in synergetische Wechselwirkungen tritt, Katalysatoren der vorstehend angegebenen Gattung erhalten werden können, deren Aktivität verbessert ist und mit deren Hilfe der Stickoxidgehalt von Verbrennungsabgasen bei gleichzeitiger besonders wirtschaftlicher Ausnutzung der teuren oxidischen Katalysatorkomponenten sowie des Reduktionsmittels weitgehend entfernt werden kann. Ferner wird eine höhere $SO_x$-Beständigkeit erreicht.

Gegenstand der Erfindung ist somit ein Katalysator zur Verringerung des Stickoxidgehalts von Abgasen, insbesondere von Verbrennungsabgasen, enthaltend mindestens eines der Metalle Ti, Zr, V, W, Mo oder Ce in Form eines oder mehrerer ihrer Oxide, in Kombination mit einem Silikat mit Dreischichtstruktur (Dreischichtsilikat), gekennzeichnet durch folgende Merkmale:

a) das Dreischichtsilikat besteht aus bzw. enthält als wesentlichen Bestandteil einen säureaktivierten, aber noch nicht röntgenamorphen Talk dessen kristalline Schichtstruktur im wesentlichen noch erhalten ist und dessen BET-Oberfläche um mindestens 15%, vorzugsweise um mindestens 50%, bezogen auf die BET-Oberfläche des Dreischichtsilikats vor der Säureaktivierung, erhöht ist;

b) das Atomverhältnis zwischen dem im säureaktivierten Talk enthaltenen Silicium und dem (den) in dem (den) Oxid(en) enthaltenen Metall(en) beträgt 0,2 bis 50, vorzugsweise 0,4 bis 25.

Durch die Säureaktivierung des Talks wird einmal die katalytische Aktivität und zum anderen die Beständigkeit gegenüber $SO_2$ verbessert.

Die Säureaktivierung führt wahrscheinlich dazu, daß die Silikatschichten von den Rändern her angegriffen und die Tonen aus den Oktaederschichten herausgelöst werden. Die übrigbleibenden $SiO_4$-Tetraederbänder verursachen durch eine gewisse Keilwirkung und sterische Hinderung, insbesondere beim Trocknen, eine Desorientierung der Schichten. Die kristalline Schichtstruktur wird aber hierbei im wesentlichen nicht zerstört. Erreicht wird ein Zwischenzustand zwischen der kristallinen Struktur des unbehandelten Talks und der vollständig zerstörten kristallinen Struktur der amorphen Kieselsäure.

Die Säureaktivierung führt zu einer Erhöhung der spezifischen Oberfläche, die im allgemeinen nach der BET-Methode bestimmt wird. Eine angemessen hohe spezifische Oberfläche bleibt auch nach der innigen Vermischung des säureaktivierten Talks mit den oxidischen Komponenten des Katalysators erhalten, auch wenn diese in größeren Mengen verwendet werden. Andererseits darf die Säureaktivierung, wie schon gesagt, nicht so weit geführt werden, daß nur noch amorphe Kieselsäure vorliegt, da in diesem Fall offenbar keine Wechselwirkung mit den oxidischen Komponenten des Katalysators mehr stattfindet, erkennbar an einer starken Abnahme der katalytischen Aktivität bei steigendem Kieselsäuregehalt.

Der Grund, warum mit dem säureaktivierten Talk besonders aktive Katalysatoren erhalten werden, ist zwar im einzelnen noch nicht geklärt, kann jedoch auf die besonders günstige kristalline Struktur dieser Substanz zurückgeführt werden. Diese geht mit den Metalloxiden eine synergetische Wechselwirkung ein. Zum gegenwärtigen Zeitpunkt kann zwar noch keine eindeutige mechanistische Erklärung für diese Wechselwirkung gegeben werden, doch scheint das Vorliegen einer durch die Säureaktivierung umorientierten silikatischen Schichtstruktur eine notwendige Voraussetzung zu sein. Verwendet man nämlich anstelle der erfindungsgemäßen säureaktivierten Silkate zur Umsetzung mit den oxidischen Metallkomponenten z.B. ein Kieselgel entsprechender BET-Oberfläche, so resultiert eine deutliche Abnahme der katalytischen Aktivität.

Die spezifische Oberfläche des erfindungsgemäß bevorzugt verwendeten säureaktivierten Talks liegt vorzugsweise zwischen etwa 5 und 100 m²/g.

Der Säureaufschluß wird im allgemeinen so weit durchgeführt, bis der $SiO_2$-Gehalt des säureaktivierten Talks gegenüber dem des Ausgangsmaterials um mindestens 2%, vorzugsweise um mindestens 5%, zugenommen hat. Je nach Ausgangsmaterial beträgt der $SiO_2$-Gehalt dann 50 bis 90 Gew.-%. Der Säureaufschluß wird hierbei nicht so weit geführt, daß nur noch röntgenamorphes $SiO_2$ hinterbleibt. Vielmehr wird der Säureaufschluß dann unterbrochen, wenn ein bestimmter Kristallinitätsgrad des säureaktivierten Silikats bzw. ein Anteil von nicht mehr als 45% an extrahierbarem Silikat vorliegt. Der Anteil an extrahierbarem Silikat wird dadurch bestimmt, daß man den nach Durchführung des Säureaufschlusses erhaltenen gewaschenen und getrockneten Filterkuchen mit Sodalösung behandelt, wie von Y. Otsubo, Jap.J.Chem 72 (1951) 573, beschrieben.

Vorzugsweise beträgt der Anteil des Porenvolumens, welcher auf Makroporen mit einem Durchmesser von > 80 nm entfällt, mindestens 25%. Das Porenvolumen wird hierbei nach der Quecksilberporosimetrie bestimmt.

Die Säureaktivierung der Talk enthaltenden Ausgangsmaterialien kann in an sich bekannter Weise durchgeführt werden, wobei vorzugsweise wäßrige Mineralsäuren, wie Salzsäure oder Schwefelsäure, verwendet werden. Man kann aber auch organische Säuren, wie Ameisensäure und Essigsäure, verwenden. Die Säurekonzentration liegt im Bereich von 1 bis 60 Gew.-%, bezogen auf den Trockensubstanzgehalt, vorzugsweise im Bereich von 10 bis 40 Gew.-%. Eine vorhergehende Naßklassierung des Rohmaterials kann sich als vorteilhaft erweisen. Die säurebehandelte Masse wird mit gegebenenfalls angesäuertem Wasser gewaschen und abfiltriert.

Die unter Verwendung des säureaktivierten Talks erhaltenen erfindungsgemäßen Katalysatoren zeichnen sich auch durch eine besonders hohe Beständigkeit gegenüber Schwefeloxiden bzw. Schwefelsäure aus.

Andererseits sind Katalysatoren, die unter Verwendung von amorpher Kieselsäure hergestellt wurden, zwar gegenüber Schwefeloxiden und Schwefelsäure beständig, ihre $NO_x$-Aktivität ist jedoch deutlich schlechter.

Als Ausgangsverbindungen für die Metalloxid-Komponente des erfindungsgemäßen Katalysators verwendet man einmal die entsprechenden Metalloxide und zum anderen die in die Metalloxide überführbaren Substanzen, z.B. die Metalle, die Hydroxide und insbesondere die Salze, Komplexverbindungen und/oder die Sauerstoffsäuren bzw. die von diesen Säuren abgeleiteten Salze. Diese können gegebenenfalls zusammen mit einem als Reduktionsmittel und/oder Komplexbildner wirkenden Zusatz verwendet werden.

Cer kann z.B. ausgehend von $Ce_2O_3$, $CeO_2$, $Ce(SO_4)_2$ und $Ce_2(C_2O_4)_3$ eingesetzt werden. Geeignete Ausgangsstoffe für Zirkonoxid sind neben den Oxidhydraten z.B. die Zirkon- und Zirkonylsalze, wie $Zr(SO_4)_2H$, $ZrCl_4$, $ZrOCl_2$ und $Zr(C_2O_4)_2$.

Als Ausgangssubstanzen für die Wolframkomponente eignen sich z.B. Wolframoxide, wie $WO_3$, $W_{10}O_{29}$, $W_4O_{11}$, $WO_2$, Mono- und Polywolframsäuren, Heteropolysäuren, Wolframate, Wolframhalogenide und -oxyhalogenide. Statt der genannten Wolframverbindungen können auch entsprechende Molybdänverbindungen eingesetzt werden. Im Falle des Vanadiums stellen u.a. $V_2O_5$, $VO_2$, $V_2O_3$ und $VO$ geeignete Ausgangsverbindungen dar, sowie Ortho- und Polyvanadinsäure, bzw. -vanadate, Vanadiumhalogenide und -oxyhalogenide, wie z.B. $VOCl_3$, verschiedene Vanadium- bzw. Vanadylsalze.

Geeignete Titanverbindungen sind neben den Oxiden und Oxidhydraten die Titan- oder Titanylsalze, insbesondere die Halogenide und die Sulfate. Vorzugsweise wird Titanylsulfat verwendet. Es können auch metallorganische Verbindungen verwendet werden, z.B. Ester der Titansäure, wie Isopropyltitanat.

Es wurde gefunden, daß besonders vorteilhafte Ergebnisse erzielt werden, wenn die Metalloxide einzeln in folgenden Konzentrationsbereichen vorliegen:

| | |
|---|---|
| $TiO_2$ | = 10 - 80 Gew.-% |
| $WO_3$ und/oder $MoO_3$ | = 1 - 25 Gew.-% |
| $V_2O_5$ | = 0,1 - 25 Gew.-% |
| $CeO_2$ | = 1 - 25 Gew.-% |

wobei der Talk den Rest der wirksamen Komponente darstellt.

Bei den bevorzugten Katalysatoren liegen die Metalloxide in Zweierkombinationen, insbesondere aber in Dreierkombinationen vor.

In den Dreierkombinationen liegen die Metalloxide in folgenden bevorzugten Mengenanteilen vor:

(a) $(TiO_2 + WO_3$ und/oder $MoO_3 + V_2O_5)$
  = 10 - 80 Gew.-%
(b) $(TiO_2 + CeO_2 + V_2O_5)$
  = 10 - 80 Gew.-%
(c) $(TiO_2 + ZrO_2 + V_2O_5)$
  = 10 - 80 Gew.-%
(d) $(WO_3$ und/oder $MoO_3 + CeO_2 + V_2O_5)$
  = 10 - 25 Gew.-%
(e) $(WO_3$ und/oder $MoO_3 + ZrO_2 + V_2O_5)$
  = 10 - 25 Gew.-%

wobei der säureaktivierte Talk jeweils den Rest der wirksamen Komponente darstellt.

Das Gewichtsverhältnis zwischen den Metalloxiden der Dreierkombination umfaßt vorzugsweise jeweils folgende Bereiche:

(a) $WO_3$ und/oder $MoO_3/TiO_2$ = 0,01 - 0,25
  $V_2O_5/TiO_2$ = 0,01 - 0,11
(b) $CeO_2/TiO_2$ = 0,05 - 0,23
  $V_2O_5/TiO_2$ = 0,01 - 0,11
(c) $ZrO_2/TiO_2$ = 0,01 - 0,24
  $V_2O_5/TiO_2$ = 0,01 - 0,11
(d) $CeO_2/WO_3$ und/oder $MoO_3$ = 0,1 - 5,0
  $V_2O_5/WO_3$ und/oder $MoO_3$ = 0,1 - 2,5
(e) $V_2O_5/WO_3$ und/oder $MoO_3$ = 0,1 - 2,5
  $ZrO_2/WO_3$ und/oder $MoO_3$ = 0,1 - 10

Die erfindungsgemäßen Katalysatoren sind beispielsweise durch Tränken des Talks mit einer Lösung, die eines oder mehrere der genannten Metalle in Form von Salzen und/oder Komplexverbindungen enthält, und anschließendes Calcinieren erhältlich.

Nach einer anderen Variante kann der Katalysator dadurch erhalten werden, daß der Talk mit einem Oxid oder Salz eines oder mehrerer der genannten Metalle mechanisch vermischt wird (z.B. durch Vermahlen in einer Kugelmühle); anschließend wird das Gemisch gegebenenfalls mit einer Lösung getränkt, die eines oder mehrere der genannten Metalle in Form von Salzen und/oder Komplexverbindungen enthält, worauf eine Calcinierung erfolgt.

Ferner können die erfindungsgemäßen Katalysatoren durch Aus- oder Umfällen mindestens einer Verbindung, die eines oder mehrere der genannten Metalle enthält, in Gegenwart einer Suspension des Talks Auswaschen der Fremdionen und anschließendes Calcinieren erhalten werden.

Die Aus- oder Umfällung der Verbindung(en), die eines oder mehrere der genannten Metalle enthält (enthalten), kann auch in Gegenwart einer Mischsuspension des Talks und eines Oxids oder Salzes einer oder mehrerer der genannten Metalle erfolgen. Nach dem Auswaschen der Fremdionen erfolgt wieder eine Calcinierung.

Auf diese Weise erreicht man eine nahezu optimale innige Mischung der oxidischen Metallkomponenten mit dem Talk.

Besteht die oxidische Metallkomponente aus mehreren Metalloxiden, so können die jeweiligen Ausgangsverbindungen entweder gemeinsam oder in mehreren Arbeitsgängen nacheinander gefällt werden, wobei die Reihenfolge der Fällungsschritte in der Regel die katalytische Aktivität beeinflußt und im Einzelfall optimiert werden muß. Es kann sich allerdings auch als zweckmäßig erweisen, den Talk gegebenenfalls nach einem oder mehreren Fällungsschritten, mit der Lösung einer entsprechenden Übergangsverbindung zu imprägnieren. Die Imprägnierung kann dabei sowohl vor als auch nach der Formgebung und der Calcinierung des Katalysators erfolgen.

Der erfindungsgemäße Katalysator kann auch ein inertes Trägermaterial enthalten. Der Katalysator liegt üblicherweise als Formkörper vor, insbesondere in Form von Kugeln, Tabletten, Strangpreßlingen, langgestreckten oder flachen Wabenkörpern (letztere werden als «Kanalgitter» bezeichnet), Stäben, Rohren, Platten, Ringen, Wagenrädern oder Sattelkörpern.

Diese Formkörper können z.B. durch Tablettieren oder Strangpressen der Katalysatormasse erhalten werden, wobei gegebenenfalls Zusätze, die die Formbarkeit verbessern, beigemischt werden können. Derartige Zusätze sind beispielsweise Graphit oder Aluminiumstearat. Es können auch Zusätze, die die Oberflächenstruktur verbessern, beigemsicht werden. Hierbei handelt es sich z.B. um organische Substanzen, die bei der anschließenden Calcinierung unter Zurücklassung einer porösen Struktur verbrennen.

Die Verwendung von Zusätzen, die die Verformbarkeit verbessern, ist nicht unbedingt erforderlich, da das Ausgangsmaterial, auch wenn es in einer innigen Vermischung mit der Metallkomponente vorliegt, eine plastische Verformbarkeit besitzt. Es können aber noch neutrale Betonite oder andere Bindemittel, wie Kaolin oder Zemente, zugesetzt werden. Die Formgebung erfolgt im allgemeinen unter Zusatz von Wasser oder organischen Lösungsmitteln, z.B. von ein- oder mehrwertigen Alkoholen.

Die erfindungsgemäßen Katalysatoren werden in der Regel nach erfolgter Formgebung getrocknet und bei Temperaturen von etwa 200 bis 700° C, vorzugsweise von 300 bis 550° C, calciniert. Zur Festigkeitserhöhung können außerdem anorganische faserartige Materialien vor der Verformung zugesetzt werden. Durch die Calcinierung wird der Katalysator aktiviert und erreicht auf diese Weise seine vorteilhaften Eigenschaften, insbesondere wenn die vorstehend angegebenen Temperaturbereiche eingehalten werden.

Typische Arbeitsweisen bei der Herstellung der erfindungsgemäßen Katalysatoren sind in den Beispielen beschrieben.

Gegenstand der Erfindung ist auch die Anwendung der erfindungsgemäßen Katalysatoren zur reduktiven Verringerung des Stickoxidgehalts von Verbrennungsabgasen, welche neben den üblichen Abgasbestandteilen auch Schwefeloxide ($SO_x$) enthalten, wobei als Reduktionsmittel $NH_3$ verwendet wird.

Bei der Reduktion mit $NH_3$ wird der Stickoxidgehalt der Verbrennungsabgase dadurch verringert, daß sich $N_2$ und $H_2O$ bilden. Als Stickoxide ($NO_x$) werden die verschiedenen Sauerstoffverbindungen des Stickstoffs bezeichnet, wie z.B. NO, $N_2O_3$, $NO_2$, $N_2O_5$; es handelt sich jedoch vorwiegend um NO und $NO_2$, wobei NO überwiegt.

Die $NO_x$-Konzentration der zu reinigenden Abgase kann in weiten Grenzen variieren; sie liegt im allgemeinen im Bereich von 100 Vol-ppm bis 5 Vol.-%. Das molare Verhältnis $NH_3$:$NO_x$ beträgt im allgemeinen 0,3 bis 3, vorzugsweise 0,6 bis 1,5, und kann durch regelungstechnische Maßnahmen in der Weise eingestellt werden, daß maximale $NO_x$-Umsätze bei möglichst niedrigem $NH_3$-Schlupf erzielt werden. Das $NH_3$ kann sowohl gasförmig als auch in Form einer wäßrigen Lösung eindosiert werden.

Die erfindungsgemäßen Katalysatoren zeichnen sich gegenüber bekannten Katalysatoren durch eine sehr weitgehende selektive Umsetzung des für die Reduktion der Stickoxide bevorzugt verwendeten Ammoniaks aus. Bei bekannten Verfahren wird, insbesondere bei höheren Betriebstemperaturen, ein beträchtlicher Teil des Ammoniaks nicht zur gewünschten $NO_x$- Entfernung verbraucht, sondern selbst durch den im Abgas vorhandenen Sauerstoff oxidiert. Dies führt zu einer zusätzlichen Stickstoffbildung bzw. vermindert den zwischen Reaktoreintritt und -austritt beobachteten $NO_x$-Umsatz und führt zu unnötigem $NH_3$-Verbrauch.

Für die Entstickungsreaktion eignen sich prinzipiell sämtliche üblicherweise für heterogen katalysierte Gasphasenreaktionen verwendete Reaktoren, sofern die Konstruktionsmerkmale des Reaktors den Durchsatz entsprechend hoher Rauchgasvolumenströme gestatten. Zulässige Raumgeschwindigkeiten (RG) liegen im Bereich von 500 bis 20 000, vorzugsweise zwischen 1000 und 15 000 Liter Gas je h und Liter Katalysator, wobei diese Raumgeschwindigkeiten sich auf ein Gas bei 0° C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 200 bis 600° C, vorzugsweise von 250 bis 430° C. Bei erheblich höheren Temperaturen kann eine Oxidation des Ammoniaks durch den im Abgas enthaltenen Sauerstoff stattfinden, wodurch der Ammoniak der Reaktion mit den Stickoxiden entzogen wird, so daß der Entstickungsgrad sinken kann. Dieser nachteilige Effekt ist jedoch bei den erfindungsgemäßen Katalysatoren nicht so stark wie bei bekannten Katalysatoren.

Im folgenden werden typische Beispiele für die Herstellung und Anwendung der erfindungsgemäßen Katalysatoren aufgeführt.

Die Wirksamkeit der Katalysatoren hinsichtlich der Beseitigung von Stickstoffoxiden aus Gasgemischen, welche u.a. auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hat folgende Zusammensetzung.

| | | |
|---|---|---|
| $O_2$ | 3 | Vol.-% |
| $H_2O$ | 10 | Vol.-% |
| NO | 750 | Vol-ppm |
| $NO_2$ | 50 | Vol-ppm |
| $NH_3$ | 800 | Vol-ppm |
| $SO_2$ | 950 | Vol-ppm |
| $SO_3$ | 50 | Vol-ppm |
| $N_2$ | Differenz bezüglich 100 Vol-%. | |

Die $NO_x$-Konzentration im Gasgemisch wurde vor und nach dem Passieren der Katalysatorschüttgutschicht durch einen geeichten Analysator (Chemolumineszenzverfahren) kontinuierlich gemessen. Als Maß für die Wirksamkeit der Katalysatoren bezüglich der Reduktion der Stickoxide dient die Angabe des Umsatzgrades von $NO_x$ nach Einstellung des stationären Zustandes, definiert durch die folgende Beziehung:

$$NO_x\text{-Umsatz } (U_{NO_x}) = \frac{C_{NO_x}^E - C_{NO_x}^A}{C_{NO_x}^E} \cdot 100 \ (\%)$$

Dabei bezeichnet das Symbol $C_{NO_x}$ die Konzentration von NO plus $NO_2$, wobei sich die Superskripte E und A auf den Zustand des Gasgemisches vor bzw. nach Passieren des Katalysators beziehen.

### Beispiel 1

(a) 2 kg Talk mit einer BET-Oberfläche von 5 m²/g und der in Tabelle I angegbenen chemischen Zusammensetzung werden mit 8 Liter einer wäßrigen HCl-Lösung 6 Stunden bei 80° C gerührt. Der HCl-Gehalt beträgt etwa 20 Gew.-%, bezogen auf die Trockensubstanz. Man saugt ab und wäscht den Filterkuchen reichlich mit angesäuertem Wasser (mittels HCl auf einen pH-Wert von 3,5 eingestellt). Der erhaltene, säureaktivierte Talk (SAT genannt) hat nach dem Trocknen bei 200° C eine BET-Oberfläche von 33 m²/g. Seine chemische Zusammensetzung ist ebenfalls in Tabelle I angegeben.

(b) In eine Suspension von 400 g des in Stufe (a) erhaltenen SAT trägt man unter Rühren 180 g Titanylsulfat ($TiOSO_4$) ein, neutralisiert mit Ammoniak und saugt ab. Der Feststoff wird sulfatfrei gewaschen, 15 Stunden bei 120° C getrocknet und mit 9,7 g $WO_3$ in Form einer ammoniakalischen Wolframsäurelösung sowie der durch Reduktion von 1,3 g Ammoniummetavanadat mit 1,6fachem Überschuß Oxalsäuredihydrat erhaltenen Lösung verknetet. Die Lösungsmittelmengen werden so gewählt, daß leicht knetbare, pastöse Massen entstehen.

Der Anteil des mittels Hg-Porosimetrie bestimmten Porenvolumens, welcher auf Makroporen mit einem Durchmesser von > 80 nm entfällt, beträgt 77,1 %.

### Beispiel 2

400 g des im Beispiel 1 als Ausgangsmaterial verwendeten Talks werden ohne Säurebehandlung, entsprechend der Arbeitsweise von Stufe (b) mit Titanylsulfat, ammoniakalischer Wolframsäurelösung und Ammoniummetavanadat belegt.

Die Zusammensetzung der Katalysatoren, die Reaktionstemperaturen und die $NO_x$-Umsätze bei einer Raumgeschwindigkeit von 6400 $h^{-1}$ sind in Tabelle II angegeben. Für die Durchführung der Reaktionen wurde das vorstehend angegebene Gasgemisch verwendet; die $NO_x$-Umsätze wurden nach der vorstehend angegebenen Formel berechnet.

#### Tabelle I: Zusammensetzung der Silikate

| Silikat | $SiO_2$ (%) | $Al_2O_3$ (%) | $Fe_2O_3$ (%) | CaO (%) | MgO (%) | $Na_2O$ (%) | $K_2O$ (%) | Glühverlust (%) |
|---|---|---|---|---|---|---|---|---|
| Roh-Talk von Beispiel 2 | 47.2 | 11.3 | 1.9 | 0.5 | 28.3 | 0.2 | 0.5 | 9.1 |
| SAT von Beispiel 1 | 55.4 | 9.3 | 1.4 | 0.2 | 24.9 | 0.2 | 0.5 | 7.5 |

#### Tabelle II
#### Zusammensetzung der Katalysatoren und $NO_x$-Umsätze

| | Zusammensetzung (%) | T (°C) | $U_{NO_x}$ % |
|---|---|---|---|
| Beispiel 1 | $V_2O_5$ (0,2) $WO_3$ (1,8) $TiO_2$ (18) SAT (80) | 250 | 42 |
| | | 300 | 93 |
| | | 350 | 98 |
| | | 400 | 98 |
| Beispiel 2 | $V_2O_5$ (0,2) $WO_3$ (1,8) $TiO_2$ (18) Talk (80) | 250 | nb |
| | | 300 | 76 |
| | | 350 | 90 |
| | | 400 | .91 |

### Patentansprüche

1. Katalysator zur Verringerung des Stickoxidgehalts von Abgasen, insbesondere von Verbrennungsabgasen, enthaltend mindestens eines der Metalle Ti, Zr, V, W, Mo oder Ce in Form eines oder mehrerer ihrer Oxide, in Kombination mit einem Silikat mit Dreischichtstruktur (Dreischichtsilikat), gekennzeichnet durch folgende Merkmale:

a) das Dreischichtsilikat besteht aus bzw. enthält als wesentlichen Bestandteil einen säureaktivierten, aber noch nicht röntgenamorphen Talk, dessen kristalline Schichtstruktur im wesentlichen noch erhalten ist und dessen BET-Oberfläche um mindestens 15%, vorzugsweise um mindestens 50%, bezogen auf die BET-Oberfläche des Dreischichtsilikats vor der Säureaktivierung, erhöht ist;

b) das Atomverhältnis zwischen dem im säureaktivierten Talk enthaltenen Silicium und dem (den) in dem (den) Oxid(en) enthaltenen Metall(en) beträgt 0,2 bis 50, vorzugsweise 0,4 bis 25.

2. Katalysator nach Anspruch 1, dadurch gekennzeichnet, daß der $SiO_2$-Gehalt des säureakti-

vierten Talks gegenüber dem des Ausgangsmaterials um mindestens 2%, vorzugsweise um mindestens 5%, erhöht ist.

3. Katalysator nach Anspruch 1 oder 2, dadurch gekennzeichnet, daß der Anteil des Porenvolumens, welcher auf Makroporen mit einem Durchmesser von > 80 nm entfällt, mindestens 25% beträgt.

4. Katalysator nach einem der Ansprüche 1 bis 3, dadurch gekennzeichnet, daß die Metalloxide einzeln in folgenden Konzentrationsbereichen vorliegen:

$TiO_2$ = 10 - 80 Gew.-%
$WO_3$ und/oder $MoO_3$ = 1 - 25 Gew.-%
$V_2O_5$ = 0,1 - 25 Gew.-%
$CeO_2$ = 1 - 25 Gew.-%

wobei der Talk den Rest der wirksamen Komponente darstellt.

5. Katalysator nach einem der Ansprüche 1 - 4, dadurch gekennzeichnet, daß die Metalloxide in einer der folgenden Dreierkombinationen vorliegen:

(a) $(TiO_2 + WO_3$ und/oder $MoO_3 + V_2O_5)$
= 10 - 80 Gew.-%
(b) $(TiO_2 + CeO_2 + V_2O_5)$
= 10 - 80 Gew.-%
(c) $(TiO_2 + ZrO_2 + V_2O_5)$
= 10 - 80 Gew.-%
(d) $(WO_3$ und/oder $MoO_3 + CeO_2 + V_2O_5)$
= 10 - 25 Gew.-%
(e) $(WO_3$ und/oder $MoO_3 + ZrO_2 + V_2O_5)$
= 10 - 25 Gew.-%

wobei der Talk jeweils den Rest der wirksamen Komponente darstellt.

6. Katalysator nach Anspruch 5, dadurch gekennzeichnet, daß das Gewichtsverhältnis zwischen den Metalloxiden der Dreierkombination jeweils folgende Bereiche umfaßt:

(a) $WO_3$ und/oder $MoO_3/TiO_2$ = 0,01 - 0,25
$V_2O_5/TiO_2$ = 0,01 - 0,11
(b) $CeO_2/TiO_2$ = 0,05 - 0,23
$V_2O_5/TiO_2$ = 0,01 - 0,11
(c) $ZrO_2/TiO_2$ = 0,01 - 0,24
$V_2O_5/TiO_2$ = 0,01 - 0,11
(d) $CeO_2/WO_3$ und/oder $MoO_3$ = 0,1 - 5,0
$V_2O_5/WO_3$ und/oder $MoO_3$ = 0,1 - 2,5
(e) $V_2O_5/WO_3$ und/oder $MoO_3$ = 0,1 - 2,5
$ZrO_2/WO_3$ und/oder $MoO_3$ = 0,1 - 10

7. Katalysator nach einem der Ansprüche 1 bis 6, dadurch gekennzeichnet, daß er als Formkörper, insbesondere in Form von Kugeln, Tabletten, Strangpreßlingen, langgestreckten oder flachen Wabenkörpern, Platten, Stäben, Rohren, Ringen, Wagenrädern oder Sattelkörpern vorliegt.

8. Katalysator nach einem der Ansprüche 1 bis 7, dadurch gekennzeichnet, daß er durch Tränken des Talks mit einer Lösung, die eines oder mehrere der genannten Metalle in Form von Salzen und/oder Komplexverbindungen enthält, und anschließendes Calcinieren erhältlich ist.

9. Katalysator nach einem der Ansprüche 1 bis 7, dadurch gekennzeichnet, daß er durch mechanisches Vermischen des Talks mit einem Oxid oder Salz eines oder mehrerer der genannten Metalle, anschließendes Tränken mit einer Lösung, die eines oder mehrere der genannten Metalle in Form von Salzen und/oder Komplexverbindungen enthält, und anschließendes Calcinieren erhältlich ist.

10. Katalysator nach einem der Ansprüche 1 bis 7, dadurch gekennzeichnet, daß er durch Aus- oder Umfällen mindestens einer Verbindung, die eines oder mehrere der genannten Metalle enthält, in Gegenwart einer Suspension des Talks, Auswaschen der Frendionen und anschließendes Calcinieren erhältlich ist.

11. Katalysator nach einem der Ansprüche 1 bis 7, dadurch gekennzeichnet, daß er durch Aus- oder Umfällen mindestens einer Verbindung, die eines oder mehrere der genannten Metalle enthält, in Gegenwart einer Mischsuspension des Talks und eines Oxids oder Salzes einer oder mehrerer der genannten Metalle, Auswaschen der Fremdionen und anschließendes Calcinieren erhältlich ist.

12. Anwendung des Katalysators nach einem der Ansprüche 1 bis 11, zur reduktiven Verringerung des Stickoxidgehalts von Verbrennungsabgasen, welche neben den üblichen Abgasbestandteilen auch Schwefeloxide enthalten, wobei als Reduktionsmittel $NH_3$ verwendet wird.

13. Anwendung nach Anspruch 12, im Temperaturbereich von 250 bis 600° C, vorzugsweise von 250 bis 430° C, und bei einer Raumgeschwindigkeit im Bereich von 500 bis 20 000 Liter Verbrennungsabgase je Stunde und Liter Katalysator.

**Claims:**

1. A catalyst for decreasing the nitrogen oxide content of waste gases, in particular waste gases of combustion, containing at least one of the metals Ti, Zr, V, W, Mo or Ce in the form of one or more of their oxides, in combination with a silicate with a three-layer structure (three-layer silicate), characterised by the following features:

a) the three-layer silicate consists of or contains as an essential constituent an acid-activated, but not yet X-ray amorphous, talc whose crystalline layer structure is substantially retained and whose B.E.T. surface area is increased by at least 15%, preferably by at least 50%, in relation to the B.E.T. surface area of the three-layer silicate before acid activation;

b) the atomic ratio of the silicon contained in the acid-activated talc to the metal or metals contained in the oxide or oxides is 0 2 to 50 preferably 0.4 to 25.

2. A catalyst according to Claim 1 characterised in that the $SiO_2$ content of the acid activated talc is at least 2%, preferably at least 5%, higher than that of the starting material.

3. A catalyst according to Claim 1 or 2 characterised in that the proportion of the pore volume which accounts for macropores with a diameter of > 80 nm is at least 25%.

4. A catalyst according to any one of Claims 1 to 3, characterised in that the metal oxides are present individually in the following ranges of concentration:

$TiO_2$ = 10 - 80% by weight
$WO_3$ and/or $MoO_3$ = 1 - 25% by weight
$V_2O_5$ = 0,1 - 25% by weight
$CeO_2$ = 1 - 25% by weight

wherein the talc constitutes the rest of the active component.

5. A catalyst according to any one of Claims 1 to 4, characterised in that the metal oxides are present in one of the following ternary combinations:

(a) $(TiO_2 + WO_3$ and/or $MoO_3 + V_2O_5)$
= 10 - 80% by weight
(b) $(TiO_2 + CeO_2 + V_2O_5)$
= 10 - 80% by weight
(c) $(TiO_2 + ZrO_2 + V_2O_5)$
= 10 - 80% by weight
(d) $(WO_3$ and/or $MoO_3 + CeO_2 + V_2O_5)$
= 10 - 25% by weight
(e) $(WO_3$ and/or $MoO_3 + ZrO_2 + V_2O_5)$
= 10 - 25% by weight

wherein the talc respectively constitutes the rest of the active component.

6. A catalyst according to Claim 5, characterised in that the weight ratio between the metal oxides of the ternary combination respectively comprises the following ranges:

(a) $WO_3$ and/or $MoO_3/TiO_2$ = 0.01 - 0.25
    $V_2O_5/TiO_2$ = 0.01 - 0.11
(b) $CeO_2/TiO_2$ = 0.05 - 0.23
    $V_2O_5/TiO_2$ = 0.01 - 0.11
(c) $ZrO_2/TiO_2$ = 0.01 - 0.24
    $V_2O_5/TiO_2$ = 0.01 - 0.11
(d) $CeO_2/WO_3$ and/or $MoO_3$ = 0.1 - 5.0
    $V_2O_5/WO_3$ and/or $MoO_3$ = 0.1 - 2.5
(e) $V_2O_5/WO_3$ and/or $MoO_3$ = 0.1 - 2.5
    $ZrO_2/WO_3$ and/or $MoO_3$ = 0.1 - 10.

7. A catalyst according to any one of Claims 1 to 6, characterised in that it is provided in the form of shaped bodies, in particular in the form of spheres, pellets, extrusions, oblong or flat honeycombs, plates, rods, tubes, rings, wagon wheels or saddles.

8. A catalyst according to any one of Claims 1 to 7, characterised in that it is produced by impregnating the talc with a solution containing one or more of said metals in the form of salts and/or complex compounds, and subsequent calcination.

9. A catalyst according to any one of Claims 1 to 7, characterised in that it is produced by mechanical mixing of the talc with an oxide or salt of one or more of said metals, subsequent impregnation with a solution containing one or more of said metals in the form of salts and/or complex compounds, and subsequent calcination.

10. A catalyst according to any one of Claims 1 to 7, characterised in that it is produced by precipitating or reprecipitating at least one compound containing one or more of said metals in the presence of a suspension of the talc, washing out the foreign ions and subsequent calcination.

11. A catalyst according to any one of Claims 1 to 7, characterised in that it is produced by precipitating or reprecipitating at least one compound containing one or more of said metals in the presence of a mixed suspension of the talc and of an oxide or salt of one or more of said metals, washing out the foreign ions and subsequent calcination.

12. Use of the catalyst according to any one of Claims 1 to 11, for reductively decreasing the nitrogen oxide content of waste gases of combustion which, in addition to the usual waste gas constituents, also contain sulphur oxides, wherein $NH_3$ is used as the reducing agent.

13. Use according to Claim 12 in the temperature range of from 250 to 600° C, preferably from 250 to 430° C, and at a spatial velocity in the range of from 500 to 20,000 litres of waste gases of combustion per hour and litre of catalyst.

**Revendications**

1. Catalyseur pour la diminution du taux d'oxydes d'azote des gaz d'échappement, en particulier, des gaz d'échappement de combustion, renfermant au moins l'un des métaux Ti, Zr, V, W, Mo ou Ce, sous la forme d'un ou plusieurs de leurs oxydes, en combinaison avec un silicate présentant une structure à trois feuillets (silicate à trois feuillets), caractérisé par les points suivants:

a) le silicate à trois feuillets se compose de ou renferme, comme constituant essentiel, un talc activé par un acide, mais non encore amorphe vis-à-vis des rayons X, dont la structure cristalline en feuillets est pour l'essentiel encore maintenue et dont la surface spécifique BET est augmentée d'au moins 15%, de préférence, d'au moins 50%, par rapport à la surface spécifique BET du silicate à trois feuillets avant l'activation pour un acide;

b) le rapport atomique entre le silicium contenu dans le talc activé par un acide et le (ou les) métal (métaux) contenu(s) dans le (ou les) oxyde(s) s'élève à 0,2 à 50, de préférence à 0,4 à 25.

2. Catalyseur selon la revendication 1, caractérisé par le fait que la teneur en $SiO_2$ du talc activé par un acide est augmentée, vis-à-vis de celle de la matière de départ, d'au moins 2%, de préférence d'au moins 5%.

3. Catalyseur selon l'une des revendications 1 ou 2, caractérisé par le fait que la fraction du volume des pores, qui revient aux macropores présentant un diamètre de plus de 80 nm, s'élève à au moins 25%.

4. Catalyseur selon lune des revendications 1 à 3, caractérisé par le fait que les oxydes métalliques sont présents individuellement dans les plages de concentrations suivantes.

| | | |
|---|---|---|
| $TiO_2$ | = 10 - 80% | en poids |
| $WO_3$ et/ou $MoO_3$ | = 1 - 25% | en poids |
| $V_2O_5$ | = 0,1 - 25% | en poids |
| $CeO_2$ | = 1 - 25% | en poids |

où le talc représente le reste du composant actif.

5. Catalyseur selon l'une des revendications 1-4, caractérisé par le fait que les oxydes métalliques sont présents dans l'une des combinaisons ternaires suivantes:

(a) $(TiO_2 + WO_3$ et/ou $MoO_3 + V_2O_5)$
= 10 - 80% en poids
(b) $(TiO_2 + CeO_2 + V_2O_5)$
= 10 - 80% en poids
(c) $(TiO_2 + ZrO_2 + V_2O_5)$
= 10 - 80% en poids
(d) $(WO_3$ et/ou $MoO_3 + CeO_2 + V_2O_5)$
= 10 - 25% en poids
(e) $(WO_3$ et/ou $MoO_3 + ZrO_2 + V_2O_5)$
= 10 - 25% en poids

où talc représente à chaque fois le reste du composant actif.

6. Catalyseur selon la revendication 5, caractérisé par le fait que le support pondéral entre les oxydes métalliques de la combinaison ternaire se situe dans les plages respectives suivantes:

(a) $WO_3$ et/ou $MoO_3/TiO_2$ = 0,01 - 0,25
$V_2O_5/TiO_2$ = 0,01 - 0,11
(b) $CeO_2/TiO_2$ = 0,05 - 0,23
$V_2O_5/TiO_2$ = 0,01 - 0,11
(c) $ZrO_2/TiO_2$ = 0,01 - 0,24
$V_2O_5/TiO_2$ = 0,01 - 0,11
(d) $CeO_2/WO_3$ et/ou $MoO_3$ = 0,1 - 5,0
$V_2O_5/WO_3$ et/ou $MoO_3$ = 0,1 - 2,5
(e) $V_2O_5/WO_3$ et/ou $MoO_3$ = 0,1 - 2,5
$ZrO_2/WO_3$ et/ou $MoO_3$ = 0,1 - 10.

7. Catalyseur selon l'une des revendications 1 à 6, caractérisé par le fait qu'il se présente sous la fome de corps façonnés, en particulier sous la forme de sphères, de pastilles, de comprimés extrudés, de corps en nid d'abeilles allongés ou plats, de plaques, de barres, de tubes, d'anneaux, de roues de voiture ou de corps en selles.

8. Catalyseur selon l'une des revendications 1 à 7, caractérisé par le fait qu'il peut être obtenu par imprégnation du talc par une solution qui renferme un ou plusieurs des métaux cités sous forme de sels et/ou de composés complexes, et par calcination subséquente.

9. Catalyseur selon l'une des revendications 1 à 7, caractérisé par le fait qu'il peut être obtenu par mélange mécanique du talc avec un oxyde ou un sel d'un ou plusieurs des métaux cités, imprégnation subséquente par une solution, qui renferme un ou plusieurs des métaux cités sous forme de sels et/ou de composés complexes, et calcination subséquente.

10. Catalyseur selon l'une des revendications 1 à 7, caractérisé par le fait qu'il peut être obtenu par précipitation ou recristallisation d'au moins un composé qui renferme un ou plusieurs des métaux cités, en présence d'une suspension du talc, élimination par lavage des ions étrangers et calcination subséquente.

11. Catalyseur selon l'une des revendications 1 à 7, caractérisé par le fait qu'il peut être obtenu par précipitation ou recristallisation d'au moins un composé qui renferme un ou plusieurs des métaux cités, en présence d'une suspension mixte du talc et d'un oxyde ou d'un sel d'un ou plusieurs des métaux cités, élimination par lavage des ions étrangers et calcination subséquente.

12. Utilisation du catalyseur selon l'une des revendications 1 à 11 pour la diminution par réduction du taux d'oxydes d'azote des gaz d'échappement de combustion, lesquels renferment, en dehors des composants usuels des gaz d'échappement, également des oxydes de soufre, où l'on utilise $NH_3$ comme agent réducteur.

13. Utilisation selon la revendication 12, dans la plage de températures allant de 250 à 600°C, de préférence, de 250 à 430°C, et pour une vitesse spatiale se situant dans la plage de 500 à 20 000 litres des gaz d'échappement de combustion par heure et par litre de catalyseur.